# EUROPÄISCHE PATENTSCHRIFT

(11) **EP 2 132 430 B1**
(45) Veröffentlichungstag und Bekanntmachung des Hinweises auf die Patenterteilung: **09.05.2018**
(21) Anmeldenummer: 08735592.1
(22) Anmeldetag: 31.03.2008
(51) Int. Cl.: F02M 35/024

(54) **RINGFILTERELEMENT**
RING FILTER ELEMENT
ÉLÉMENT FILTRANT ANNULAIRE

(30) Priorität: 10.04.2007 DE 102007017091
(43) Veröffentlichungstag der Anmeldung: 16.12.2009
(73) Patentinhaber: Mahle International GmbH, 70376 Stuttgart (DE)
(72) Erfinder: KAPELARIE, Klaus, 9064 Pischeldorf (AT); MERT, Stephan, 9143 St. Michael (AT)
(74) Vertreter: BRP Renaud & Partner mbB Rechtsanwälte Patentanwälte Steuerberater
(86) Internationale Anmeldenummer: PCT/EP2008/053780
(87) Internationale Veröffentlichungsnummer: WO 2008/122532

(56) Entgegenhaltungen:
- EP-A1- 2 046 479
- EP-A1- 2 241 365
- WO-A-2007/009040
- DE-A1- 19 547 575
- DE-U1-202006 011 990
- DE-U1-202006 011 991
- US-A- 2 919 765
- US-A- 3 038 211
- US-A- 5 954 849

## Beschreibung

Die vorliegende Erfindung betrifft ein Ringfilterelement, insbesondere ein Ringfilterelement eines Luftfilters für einen Verbrennungsmotor.

Derartige Ringfilterelemente werden beispielsweise zum Herausfiltern von schädlichen Schwebstoffen, wie beispielsweise Stäuben aus einer Ansaugluft in einem Verbrennungsmotor eingesetzt, wodurch eine verbesserte Verbrennung sowie ein geringerer Verschleiß des Verbrennungsmotors erreicht werden kann. Die Ringfilterelemente weisen dabei einen radial innerhalb eines Filterkörpers angeordneten Rein- bzw. Rohraum sowie eine radial außerhalb des Filterkörpers angeordneten korrespondierenden Roh- oder Reinraum auf. Um dem Filterkörper, welcher üblicherweise aus Filtermaterial aufgebaut ist, die nötige Stabilität zu verleihen, ist oftmals an einer Innenmantelfläche des Filterkörpers eine sogenannte Innenzarge vorgesehen, die den Filterkörper stützt. Die Innenzarge kann dabei als Stützstruktur, insbesondere als ein aus Kunststoff gefertigtes Stützgitter ausgebildet sein und wird axial endseitig in die als Axialdichtung ausgebildete Endscheibe an den Stirnseiten des Filterkörpers eingebettet, insbesondere eingeschäumt. Da das Dichtmaterial der Endscheibe häufig nicht oder nur unzureichend mit dem Material der Innenzarge verbunden werden kann, kommt es insbesondere in diesen Bereichen zu einem erleichterten Ablösen des Dichtmaterials von der Innenzarge, wodurch die Haltbarkeit des Ringfilterelementes beeinträchtigt werden kann. Da das Dichtmaterial die Innenzarge an manchen Stellen nur hautartig überzieht, können bereits geringe Reibungseinflüsse zu einem Ablösen der Dichthaut von der Innenzarge führen. US 5 954 849 A1 beschreibt ein Ringfilterelement gemäß dem Oberbegriff des Anspruchs 1.

Die vorliegende Erfindung beschäftigt sich mit dem Problem, für ein Ringfilterelement eine verbesserte Ausführungsform anzugeben, welche sich insbesondere durch eine gesteigerte Haltbarkeit auszeichnet.
Dieses Problem wird erfindungsgemäß durch den Gegenstand des unabhängigen Anspruchs 1 gelöst. Vorteilhafte Ausführungsformen sind Gegenstand der abhängigen Ansprüche.
Die vorliegende Erfindung beruht auf dem allgemeinen Gedanken, eine Innenzarge eines Ringfilterelementes, welche an einer Innenmantelfläche sowie an den axialen Stirnseiten eines Filterkörpers des Ringfilterelements angeordnet ist, nur im Bereich der axialen Stirnseiten des Filterkörpers mit Dichtmaterial zu umspritzen und in dieses einzubetten, nicht jedoch im Bereich der Innenmantelfläche des Filterkörpers. Die mit einer Axialdichtung versehene Endscheibe ist somit im wesentlichen auf die Stirnseite des Filterkörpers beziehungsweise des Ringfilterelementes beschränkt. Im Bereich der Innenmantelfläche ist ein Auftrag von Dichtmaterial auf die Bereiche zwischen den Stegen der Innenzarge beschränkt. Ein Innendurchmesser der Endscheibe ist somit in allen Bereich zumindest so groß wie ein Innendurchmesser der Innenzarge, wodurch die Innenzarge, welche insbesondere als Stützgitter ausgebildet sein kann, nach radial innen vorzugsweise an keiner Stelle von Dichtmaterial der Endscheibe (Axialdichtung) überdeckt ist. Hierdurch wird auf konstruktiv einfache Weise verhindert, dass eine die Innenzarge dünn überziehende und schlecht an dieser haftende Dichthaut bei der Montage beziehungsweise der Demontage des Ringfilterelementes abgerieben bzw. abgelöst wird und sich dadurch eine Verbindung der Endscheibe mit dem Filterkörper zumindest stellenweise löst. Die Endscheibe ist dabei aus das Filtermaterial abdichtendem Material ausgebildet.

Zweckmäßig weist die Innenzarge einen axial über den Filterkörper hinausstehenden Ring auf, welcher Teil einer innenzargenseitigen Radialstufe ist und welcher in eine ringförmige Dichtlippe der Endscheibe eingebettet, insbesondere eingeschäumt ist. Der Ring versteift dabei die ringförmige Dichtlippe, wodurch das Ringfilterelement einfacher eingebaut und bezüglich eines Filtergehäuses abgedichtet werden kann. Da das Dichtmaterial der Endscheibe/Axialdichtung den über den Filterkörper axial hinausstehenden Ring vollständig umschließt, kommt dieser nicht in Kontakt mit dem Filtergehäuse, wodurch unter Umständen die Dichtwirkung der Axialdichtung herabgesetzt werden könnte. Gleichzeitig bietet die Einbettung des axial über die Stirnfläche des Filterkörpers hinausstehenden Teils der als Stützstruktur ausgebildeten Innenzarge in die Endscheibe/Axialdichtung den Vorteil, dass die Stützstruktur über die Endscheibe/Axialdichtung fest mit dem Filterkörper des Ringfilterelementes verbunden wird. Da üblicherweise an beiden Stirnseiten derartige Endscheiben vorgesehen sind, kann durch diese eine zuverlässige Anbindung der Innenzarge an den Filterkörper gewährleistet werden.

Bei einer weiteren vorteilhaften Ausführungsform der erfindungsgemäßen Lösung bildet die Innenzarge axial endseitig des Filterkörpers eine Radialstufe, insbesondere eine nach radial außen gerichtete Stufe mit dem sich in Axialrichtung des Ringfilterelementes anschließenden Ring. Durch diese Ausgestaltung der Innenzarge liegt diese einerseits an der Innenmantelfläche und andererseits an den beiden Stirnseiten des Filterkörpers an, wodurch sie den Filterkörper an drei Seiten zumindest teilweise U-förmig umfasst. Hierdurch wird die Innenzarge bezüglich ihrer Lage am Filterkörper eindeutig festgelegt und zugleich werden Relativbewegungen zwischen dem Filterkörper des Ringfilterelementes und der Innenzarge vorzugsweise gänzlich unterbunden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Dabei zeigen, jeweils schematisch
- Fig. 1: einen Kreissegmentausschnitt eines erfindungsgemäßen Ringfilterelements,
- Fig. 2: eine Darstellung wie in Fig. 1, jedoch in einer Detailansicht.

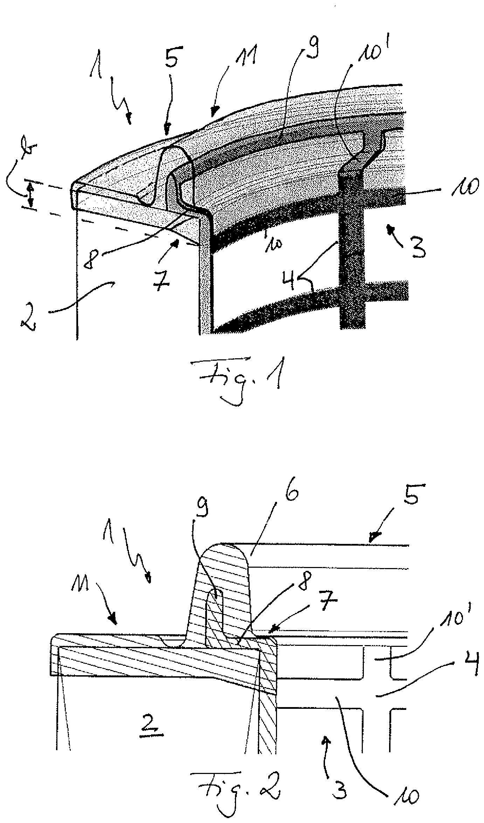

Entsprechend Fig. 1 weist ein erfindungsgemäßes Ringfilterelement 1 einen Filterkörper 2 sowie eine an einer Innenmantelfläche 3 des Filterkörpers 2 angeordnete und als Stützstruktur ausgebildete Innenzarge 4 auf. Der Filterkörper 2 weist Filtermaterial auf, welches insbesondere in der Lage ist, Staubpartikel oder ähnliche Verunreinigungen aus einem Gas, insbesondere aus Luft, herauszufiltern. Dem gemäß wird das erfindungsgemäße Ringfilterelement 1 vorzugsweise in einem Luftfilter für einen Verbrennungsmotor eingesetzt. Dabei ist gemäß den Fig. 1 und 2 lediglich ein Kreissegmentausschnitt des im übrigen nicht vollständig gezeichneten Ringfilterelementes 1 dargestellt.

Stirnendseitig am Filterkörper 2 ist auf zumindest einer Seite, vorzugsweise jedoch auf beiden Seiten des Filterkörpers 2 jeweils eine Endscheibe 11 angeordnet, die eine Axialdichtung 5 aufweist. Die Endscheibe 11 und auch die Axialdichtung 5 ist aus geschäumtem Kunststoff, beispielsweise aus Polyurethan, hergestellt und gegenüber einem zu filternden Medium undurchlässig. Wie den Fig. 1 und 2 dabei zu entnehmen ist, weist die Endscheibe 11 eine in Axialrichtung des Filterkörpers 2 abstehende Dichtkontur, insbesondere eine Dichtlippe 6 auf, welche in eine nicht gezeigte, dazu komplementär ausgebildete Dichtnut an einem ebenfalls nicht gezeigten Filtergehäuse des Luftfilters eingreifen kann. Um die Dichtlippe 6 der Axialdichtung 5 zu versteifen, ist die Innenzarge 4, welche insbesondere als Stützstruktur bzw. als Stützgitter ausgebildet ist, über ein axiales Ende des Filterkörpers 2 hinausgezogen und in die Dichtkontur, respektive in die Dichtlippe 6 eingebettet und von Dichtmaterial umschlossen. Die Innenzarge 4 steht somit in Axialrichtung über den Filterkörper 2 über und weist axial endseitig desselben eine Radialstufe 7 auf. Hierbei vergrößert die Innenzarge 4 ihren Innendurchmesser und liegt mit einem Schenkel 8 an einer Stirnseite des Filterkörpers 2 an. Von diesem Schenkel 8 im wesentlichen orthogonal abstehend, hier also in Axialrichtung des Filterkörpers 2 gesehen, ist ein Ring 9 ausgebildet, welcher Teil der Radialstufe 7 bzw. der Innenzarge 4 ist und welcher in die ringförmige Dichtlippe 6 der Axialdichtung 5 eingebettet beziehungsweise von deren Dichtmaterial umschäumt ist.

Da sich insbesondere bei einer sehr dünnen Ausprägung des Dichtmaterials nur eine unzureichende oder gar keine Verbindung zwischen dem Dichtmaterial der Endscheibe 11 und der Innenzarge 4 herstellen lässt, ist ein Innendurchmesser der Endscheibe 11 zumindest so groß wie ein Innendurchmesser der Innenzarge 4, so dass die Innenzarge 4 an keiner Stelle nach radial innen von Dichtmaterial der Endscheibe 11 überdeckt ist. Das Dichtmaterial der Endscheibe 11 ist somit zwar noch bereichsweise an der Innenmantelfläche 3 des Ringfilterelementes 1 angeordnet beziehungsweise aufgebracht, es beschränkt sich jedoch auf die Bereiche zwischen den einzelnen Stegen 10 beziehungsweise 10' der Innenzarge 4. Somit kann verhindert werden, dass eine dünne Haut aus Dichtmaterial die Stege 10, 10' überzieht. Die Hauptgefahr bei einer hautartigen Überdeckung liegt in der unzureichenden Verbindung zwischen den Stegen 10, 10' und dem Dichtmaterial, so dass letzteres leicht von den Stegen 10, 10' gelöst werden kann, wodurch die Haltbarkeit des erfindungsgemäßen Ringfilterelementes 1 beeinträchtigt wird.

Der Filterkörper 2 kann beispielsweise als Faltenstern aus zick-zack-förmig gefaltetem Filterbahnmaterial ausgebildet sein, dessen axiales Ende in einem Bereich b in das Dichtmaterial der Endscheibe 11 eingebettet beziehungsweise von diesem eingeschlossen oder umspritzt ist. Um darüber hinaus eine stets gute Dichtwirkung zwischen der Axialdichtung 5 und einem nicht gezeigten Gehäuse der Filtereinrichtung, insbesondere des Luftfilters erzielen zu können, ist der Ring 9 vollständig von Dichtmaterial umgeben.

## Patentansprüche

1. Ringfilterelement (1), insbesondere ein Ringfilterelement (1) eines Luftfilters für einen Verbrennungsmotor,
- mit einem Filtermaterial aufweisenden Filterkörper (2),
- mit zumindest einer stirnseitig am Filterkörper (2) angeordneten, das Filtermaterial abdichtenden Endscheibe (11),
- wobei das Ringfilterelement (1) eine an einer Innenmantelfläche (3) des Filterkörpers (2) angeordnete Innenzarge (4) mit Stegen (10), insbesondere eine Stützstruktur oder ein Stützgitter aufweist,
**dadurch gekennzeichnet,**
- **dass** ein Innendurchmesser der Endscheibe (11) zumindest so groß ist wie ein Innendurchmesser der Innenzarge (4), so dass die Innenzarge (4) nach radial innen nicht von Dichtmaterial der Endscheibe (11) überdeckt ist,
- **dass** ein Auftrag der Endscheibe (11) im Bereich der Innenmantelfläche (3) auf die Bereiche zwischen den Stegen (10) der Innenzarge (4) beschränkt ist.

2. Ringfilterelement nach Anspruch 1,
**dadurch gekennzeichnet,**
**dass** die Innenzarge (4) in Axialrichtung über den Filterkörper (2) übersteht und in eine Axialdichtkontur der Axialdichtung (5) eingebettet ist.

3. Ringfilterelement nach Anspruch 1 oder 2,
**dadurch gekennzeichnet,**
**dass** die Innenzarge (4) axial endseitig des Filterkörpers (2) eine Radialstufe (7) aufweist.

4. Ringfilterelement nach Anspruch 3,
**dadurch gekennzeichnet,**
**dass** die Innenzarge (4) einen axial über den Filterkörper (2) hinausstehenden Ring (9) aufweist, der Teil der Radialstufe (7) ist und der in eine ringförmige Dichtlippe (6) der Axialdichtung (5) eingebettet ist.

5. Ringfilterelement nach Anspruch 4,
**dadurch gekennzeichnet,**
**dass** der axial über den Filterkörper (2) hinausstehende Ring (9) der Radialstufe (7) einen größeren Durchmesser aufweist als der Innendurchmesser des Filterkörpers (2).

6. Ringfilterelement nach einem der Ansprüche 1 bis 5,
**dadurch gekennzeichnet,**
**dass** die Innenzarge (4) in ihrem in Axialrichtung über den Filterkörper (2) überstehenden Bereich vollständig von Dichtmaterial der Axialdichtung (5) umschlossen ist.

7. Ringfilterelement nach einem der Ansprüche 1 bis 6,
**dadurch gekennzeichnet,**
**dass** das Dichtmaterial der Endscheibe (11) und/oder der Axialdichtung (5) Kunststoff, insbesondere Polyurethan, ist.

8. Filtereinrichtung mit Filtergehäuse und einem darin angeordneten Ringfilterelement (1) nach einem der Ansprüche 1 bis 7.

## Claims

1. A ring filter element (1), in particular a ring filter element of an air filter for an internal combustion engine,
- having a filter body (2) comprising a filter material,
- having at least one end disc (11) that is arranged on the front face of the filter body (2) that furthermore seals the filter material,
- the ring filter element (1) has an inner frame (4) with webs (10) that is arranged on an interior peripheral surface (3) of the filter body (2), in particular a supporting structure or a supporting grid,
**characterised in that**
- that an interior diameter of the end disc (11) is at least as large as an interior diameter of the inner frame (4) so that the inner frame (4) is not covered radially inwardly by the sealing material of the end disc (11),
- that an application on the end disc (11) in the area of the interior peripheral surface (3) is limited to the regions between the webs (10) of the inner frame (4).

2. The ring filter element as specified in claim 1,
**characterised in that**
the inner frame (4) overlaps the filter body (2) in the axial direction and is furthermore embedded in an axial sealing contour of the axial sealing (5).

3. The ring filter element as specified in claim 1 or claim 2,
**characterised in that**
the inner frame (4) has a radial step (7) on the axial end side of the filter body (2).

4. The ring filter element as specified in claim 3,
**characterised in that**
the inner frame (4) has a ring (9) that axially protrudes over the filter body (2), said ring being part of the radial step (7) and is furthermore embedded in an annular sealing lip (6) of the axial sealing (5).

5. The ring filter element as specified in claim 4,
**characterised in that**
the ring (9), which axially protrudes over the filter body (2), of the radial step (7) has a larger diameter than the interior diameter of the filter body (2).

6. The ring filter element as specified in any one of claims 1 to 5,
**characterised in that**
the inner frame (4) is completely enclosed by sealing material if the axial sealing (5) in its region that overlaps the filter body (2) in the axial direction.

7. The ring filter element as specified in any one of claims 1 to 6,
**characterised in that**
the sealing material of the end disc (11) and/or of the axial sealing (5) is plastic, in particular polyurethane.

8. A filter device having a filter housing and a ring filter element (1) arranged therein according to one of the claims 1 to 7.

## Revendications

1. Elément de filtre annulaire (1), en particulier élément de filtre annulaire (1) d'un filtre à air pour un moteur à combustion interne,
- avec un corps de filtre (2) présentant un matériau de filtration,
- avec au moins un disque d'extrémité (11) rendant étanche le matériau de filtration, agencé côté avant sur le corps de filtre (2),
- dans lequel l'élément de filtre annulaire (1) présente un cadre intérieur (4) agencé sur une surface d'enveloppe intérieure (3) du corps de filtre (2) avec des traverses (10), en particulier une structure d'appui ou une grille d'appui,
**caractérisé en ce que**
- un diamètre intérieur du disque d'extrémité (11) est au moins aussi grand qu'un diamètre intérieur du cadre intérieur (4) de sorte que le cadre intérieur (4) n'est pas recouvert radialement vers l'intérieur par le matériau d'étanchéité du disque d'extrémité (11),
- une application du disque d'extrémité (11) est limitée dans la zone de la surface d'enveloppe intérieure (3) sur les zones entre les traverses (10) du cadre intérieur (4).

2. Elément de filtre annulaire selon la revendication 1,
**caractérisé en ce que**,
le cadre intérieur (4) déborde dans le sens axial au-delà du corps de filtre (2) et est intégré dans un contour d'étanchéité axial du joint d'étanchéité axial (5).

3. Elément de filtre annulaire selon la revendication 1 ou 2,
**caractérisé en ce que**,
le cadre intérieur (4) présente axialement côté extrémité du corps de filtre (2) un gradin radial (7).

4. Elément de filtre annulaire selon la revendication 3,
**caractérisé en ce que**,
le cadre intérieur (4) présente un anneau (9) dépassant axialement au-delà du corps de filtre (2) qui fait partie du gradin radial (7) et qui est intégré dans une lèvre d'étanchéité (6) annulaire du joint d'étanchéité axial (5).

5. Elément de filtre annulaire selon la revendication 4,
**caractérisé en ce que**,
l'anneau (9) dépassant axialement au-delà du corps de filtre (2) du gradin radial (7) présente un diamètre supérieur au diamètre intérieur du corps de filtre (2).

6. Elément de filtre annulaire selon l'une quelconque des revendications 1 à 5,
**caractérisé en ce que**,
le cadre intérieur (4) est entouré dans sa zone dépassant dans le sens axial au-delà du corps de filtre (2) complètement par le matériau d'étanchéité du joint d'étanchéité axial (5).

7. Elément de filtre annulaire selon l'une quelconque des revendications 1 à 6,
**caractérisé en ce que**,
le matériau d'étanchéité du disque d'extrémité (11) et/ou du joint d'étanchéité axial (5) est une matière plastique, en particulier du polyuréthane.

8. Dispositif de filtre avec un boîtier de filtre et un élément de filtre annulaire (1) agencé dans celui-ci selon l'une quelconque des revendications 1 à 7.
